# EUROPEAN PATENT SPECIFICATION

(11) **EP 4 390 177 B1**
(45) Date of publication and mention of the grant of the patent: **28.01.2026**
(21) Application number: 22307023.6
(22) Date of filing: 23.12.2022
(51) Int. Cl.: F16H 25/18, F16H 25/20, F16H 25/24

(54) **DAMPING ARRANGEMENT**
DÄMPFUNGSANORDNUNG
DISPOSITIF D'AMORTISSEMENT

(43) Date of publication of application: 26.06.2024
(73) Proprietor: Goodrich Actuation Systems SAS, 27950 Saint-Marcel (FR)
(72) Inventor: TURPIN, Jérôme, 78700 Conflans-Sainte-Honorine (FR)
(74) Representative: Casalonga

(56) References cited:
- US-A1- 2014 137 680
- US-A1- 2018 222 599
- US-B2- 6 668 988

## Description

### FIELD OF THE INVENTION

This application relates to an electromechanical actuator comprising a damping arrangement.

### BACKGROUND

Electromechanical actuators (EMAs) convert electrical energy to a mechanical force. The mechanical force can be used to move an actuator member between a retracted position and an extended position. In some circumstances, failure of the EMA (e.g. due to a loss of power) may cause rapid and uncontrolled movement of the actuator member, potentially damaging the EMA.

US 6668988 B2 discloses a buffering system.

US 2014/137680 A1 discloses a mechanical actuator with hydraulic damper device. US 2018/222599 A1 discloses a hydraulic actuator and accumulator arrangement.

### SUMMARY

In a first aspect, there is provided an electromechanical actuator according to claim 1.

In electromechanical actuators (EMAs), a lubricant fluid is used to improve the efficiency of the movement of the actuator member by reducing friction on the actuator member. The actuator member can move between a retracted position or an extended position. The lubricant fluid may also be used to improve the efficiency of the transfer of forces between moving parts within the EMA.

The EMA can be used to provide an actuation force to an external component. The external component may provide an external force which acts in a direction opposite to the actuation force. In some circumstances, the actuation force can be rapidly reduced substantially to zero, for example if the EMA loses power. In this scenario, the external force will cause the actuator member to move towards the retracted position. Because there is substantially no friction or resistive forces, the actuator member may overshoot the retracted position, and may move to collide with an end stop.

The present invention advantageously uses the lubricant fluid to provide a damping force to the actuator member, by restricting the flow of lubricant fluid at the constrained passage. Thus, the damping arrangement is capable of slowing the actuator member, which may protect the end stop, the actuator member, or other parts of the EMA, in a simple and cost effective design.

In some examples, the damping arrangement further comprises an end stop, wherein movement of the actuator member into contact with the end stop during the failure event causes flow of the lubricant fluid in the constrained passage to provide the damping force. By providing a damping force when the actuator member contacts the end stop, the likeliness of damage occurring to the EMA as a result of the contact is significantly reduced. The constrained passage may be comprised in the end stop.

In some examples, the damping arrangement further comprises a piston, wherein during the failure event the piston is configured to move, in response to the movement of the actuator, from a neutral position to force the lubricant fluid through the constrained passage to provide the damping force. A piston is an effective way of forcing fluid into a constrained passage.

In some examples, the damping arrangement further comprises a biasing member configured to bias the piston towards the neutral position. Biasing the pistons out of the constrained passage will ensure that the pistons are configured to provide a damping force when the actuator member contacts the damping arrangement. If a collision occurs and the actuator member is then returned to a normal operating position (for example, between the retracted or extended position), the biasing force will cause the pistons to be retracted from the constrained passages and thus be prepared for another collision. This advantageously allows the pistons to be repeatedly used to provide the damping force.

In some examples, a size of the piston includes a piston diameter and a piston length; a size of the constrained passage includes a passage diameter and an exit aperture diameter; and the size of the piston and the size of the constrained passage are determined in accordance with parameters related to the lubricant fluid in order to provide a desired damping coefficient.

In some examples, the damping coefficient is 40,000-50,000 Ns/m for a lubricant fluid temperature of 15 to 25 degrees C; 30,000-39,999 Ns/m for a lubricant fluid temperature of 26 to 35 degrees C; 20,000-29,999 Ns/m for a lubricant fluid temperature of 36 to 45 degrees C; 10,000-19,999 Ns/m for a lubricant fluid temperature of 46 to 75 degrees C; and/or 5,000-9,999 Ns/m for a lubricant fluid temperature of 76 to 145 degrees C.

In some examples, there are two; or three; or four; or five; or six; or greater than six pistons and constrained passages.

In some examples, each of the constrained passages are fluidly connected to one another. By connecting the passages to one another, fluid can be shared and the dampening force can be balanced. A more uniform dampening force can thus be provided.

In some examples, the damping force is greater than 10,000N; or 12,000N; or 14,000N; or 15,000N; or is 15,750N.

In some examples, the damping arrangement further comprises a structural portion mechanically coupled to the electromechanical actuator and configured to provide load bearing between the electromechanical actuator and an anchor point provided on a separate structural component. By including a structural portion in the damping arrangement, a single part can be provided which can provide both dampening and structural support.

In some examples, the end stop is further configured to house a sensor for determining an operating parameter of the electromechanical actuator. In some examples, the sensor is a linear variable differential transformer.

In some examples, the end stop is further configured to house one or more cables, wherein the cables are for connecting electrical components of the electromechanical actuator.

In some examples, the damping arrangement is a unitary component formed of a single part. The damping arrangement is thus able to provide multiple features in a single part. This is particularly advantageous for cost saving, ease of manufacture and reliability.

In a second aspect, there is provided a method of manufacturing the damping arrangement according to claim 12, comprising forming the damping arrangement in a single part by depositing one or more materials using additive layer manufacturing. In some examples, the material is steel.

3D printing is an effective way of building the damping arrangement of the present invention, without compromising design or manufacturability.

In some examples, the electromechanical assembly comprises a motor.

In a third aspect, there is provided an aircraft according to claim 13.

In some examples, the electromechanical actuator is configured to move a component in a landing gear, an aileron or a control surface.

The aircraft of the third aspect may each comprise any of the features of the examples described with respect to the first aspect. The method of the second aspect may include any functional steps described in relation to the examples of the first and third aspects.

### BRIEF DESCRIPTION OF THE DRAWINGS

Various examples will now be described with reference to the accompanying drawings in which:
Fig. 1 shows a schematic view of an aircraft, an EMA, and an aircraft component.
Fig. 2 shows a diagram of an EMA including the end stop of the present invention.
Fig. 3 shows a perspective view of a portion of the end stop of the present invention.
Fig. 4 shows a cross-section view of a constrained passage in an exemplary embodiment of the present invention.

### DETAILED DESCRIPTION

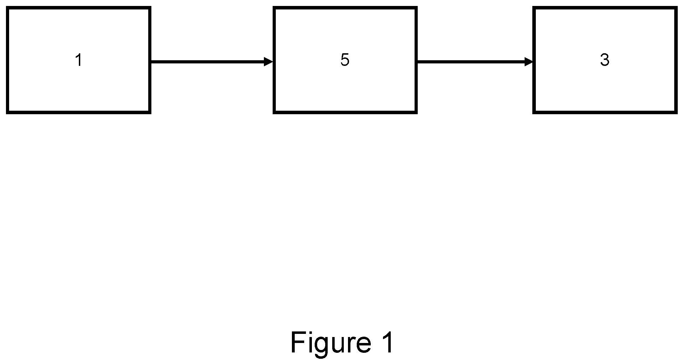

With reference to Fig. 1, an aircraft 1 is mechanically coupled to a first side of an electromechanical actuator (EMA) 5. The EMA 5, on an opposite side, is mechanically coupled to an external component 3. The external component 3 could be, for example, an aircraft aileron, landing gear, control surface etc.

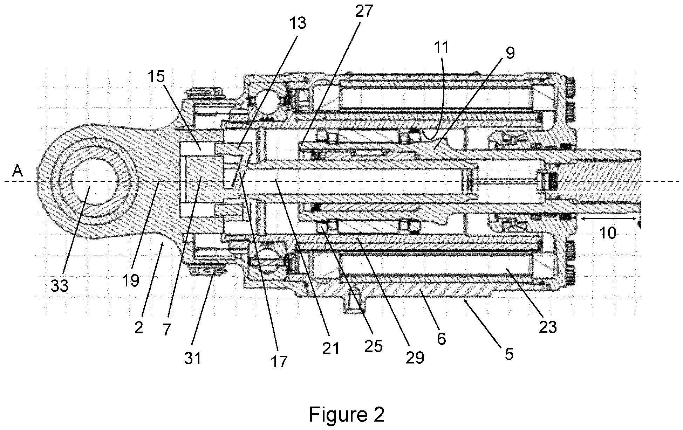

With reference to Fig. 2, the EMA 5 comprises a damping arrangement 2, an actuator member 9, a lubricant fluid 11, a sensor 21 (for example, a linear variable differential transformer), and an electromechanical assembly 23. The actuator member 9 includes a coupling mechanism 25 and has an end portion 27.

The actuator member 9 is moveable along an axis A between a retracted position and an extended position. In the retracted position, the end portion 27 of the actuator member 9 is closer to the end stop 7 when compared to the extended position. In the retracted position, the actuator member 9 is substantially concealed within a housing 6 of the EMA 5. In the extended position, a portion 10 of the actuator member 9 extends out of the housing 6.

The coupling mechanism 25 comprises an external thread which is threaded to an internal thread 29. The internal thread 29 is configured to rotate as a result of a force provided by the electromechanical assembly 23. The electromechanical assembly 23 may include, for example, a motor. In this example, supplying electrical energy to the motor would, in turn, cause the internal thread 29 to rotate.

The internal thread 29 is rotatably housed within the EMA 5. As a result, when the internal thread 29 rotates, the rotational force is transferred to the external thread of the coupling mechanism 25. There is substantially no friction between the external thread and the internal thread 29. The external thread slides along the threaded track of the internal thread 29. This results in the coupling mechanism 25 sliding linearly along the axis A. In this manner, the actuator member 9 is moveable along the axis A, and the force provided by the electromechanical assembly is transferred to the actuator member 9. In operation, friction is reduced between contact surfaces of moving parts by lubricant fluid 11.

The damping arrangement 2 comprises the end stop 7, a plurality of pistons 13, a plurality of constrained passages 15, biasing members 17, and structural portion 19.

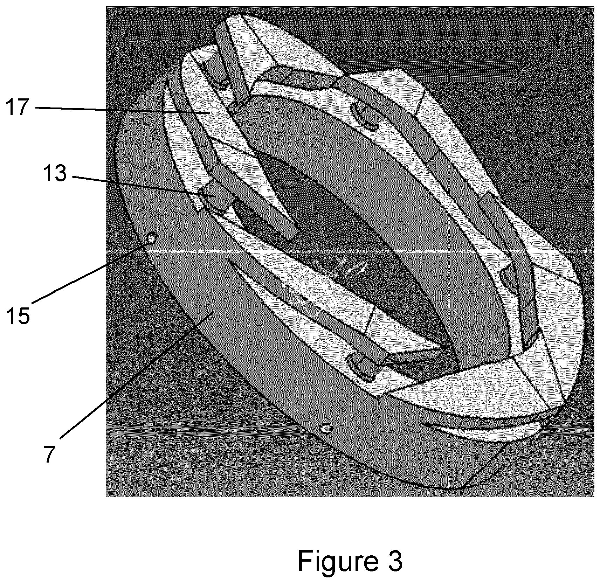

With reference to Fig. 2 and 3, six pistons 13 are shown. Each piston 13 is radially spaced, at equal intervals, on one side of the end stop 7. Each piston 13 has a corresponding constrained passage 15 which it may enter. Each constrained passage 15 is located forward of the piston 13 towards the end stop 7. Each piston 13 shares a common axis with its respective constrained passage 15, and each common axis is parallel to the axis A. Additional or fewer pistons are possible, however as a nonlimiting example six are shown.

A piston neutral position is a configuration in which the pistons 13 are only slightly inserted into the constrained passages 15. Each piston 13 is held into the piston neutral position by the biasing member 17. The biasing member 17 is configured such that, if there is no force against the biasing member 17, the biasing member 17 will maintain the piston 13 in the piston neutral position.

The biasing member 17 is further configured such that if a force were to be applied against the biasing member 17, it would deform and allow the piston 13 to enter the constrained passage 15. Each biasing member 17 is in the form of a cantilever spring, which allows its respective piston 13 to enter its respective constrained passage 15, without interfering with the performance of adjacent pistons or biasing members.

As best shown in Fig. 2, the end stop 7 is configured such that the pistons 13, in their retracted configuration, are closer to the end portion 27 of the actuator member 9. Thus, in the event that the actuator member 9 overshoots the retracted position (as will be described in more detail below), the moving actuator member 9 first makes contact with the biasing member 17 and piston 13.

The structural portion 19 is configured to provide load bearing to the EMA 5. The structural portion 19 may additionally provide an end portion which seals the EMA 5. The structural portion 19 is fixed to the EMA 5 via fixings 31.

The structural portion 19 includes an anchor point 33. The anchor point 33 is used to attach the EMA 5 to a structural part for the load bearing, for example an airframe of the aircraft 1. A similar anchor point is provided on an opposite end (not shown) of the EMA 5, to allow the end of the actuator member 9 to attach to a structural component, such as an aircraft aileron, landing gear, control surface etc.

The end stop 7 also houses the sensor 21 and associated cabling. In Fig. 3 the structure of the end stop 7 is shown in the form of an annulus. The annulus may be used, for example, to house a linear variable differential transformer (LVDT), by inserting the LVDT through the central part of the annulus. The cabling for the LVDT can be fed through the structural portion 19 of the end stop 7.

In a normal operating condition, a controlled power signal is supplied by the aircraft 1 (or a controller within the aircraft 1) to the electromechanical assembly 23 of the EMA 5. The assembly 23 converts the electrical power into a first force, which causes the internal thread 29 to rotate in a first direction. This causes the coupling mechanism 25, and thus the actuator member 9, to move in a corresponding first direction along the axis A. The first direction is away from the end stop 7.

As the actuator member 9 moves in the first direction, the portion 10 of the actuator member 9 extends out of the housing 6. The aircraft component 3, to which the actuator member 9 is attached, moves in a corresponding manner. Thus, the aircraft component 3 is controllably moved into a desired configuration, by the actuator member 9 of the EMA 5 providing an actuation force upon the aircraft component 3.

As the aircraft component 3 may be of considerable size, weight, surface area etc, one EMA 5 may not be sufficient to achieve the desired movement. Safety regulations may also require that more than one EMA 5 is deployed for safety purposes. In this case, a plurality of EMAs 5 are configured to work in parallel, at substantially the same time, each providing a portion of the overall actuation force required to move the aircraft component 3. Each EMA 5 may have a separate anchor point on the airframe and on the aircraft component 3. Each EMA 5 will contribute to achieving the overall effect.

The actuator member 9 is in constant contact with the sensor 21, which in this example is an LVDT. The position of the actuator member 9 is thus determined by the LVDT 21. As the actuator member 9 moves in the first direction, the output of the LVDT 21 changes. Thus, the position of the actuator member 9 can be precisely determined.

Once the aircraft component 3 has achieved its desired configuration, the power signals are adjusted to instruct the EMA 5 to hold the current position. A hold command still requires the electromechanical assembly 23 to be energised because a hold force is needed in order to maintain the actuator member 9 in its current position. A hold command however requires less power when compared to a move command. The EMA 5 holds its current position as required.

In a continuation of the normal operating condition, it is desired that the aircraft component 3 return to its original position. As a result, the power signal is adjusted to instruct the electromechanical assembly 23 of the EMA 5 to provide a second force. The second force causes the internal thread 29 to rotate in a second direction, which results in the coupling mechanism 25 and the actuator member 9 moving in a corresponding second direction along the axis A, towards the end stop 7.

As the actuator member 9 is retracted into the EMA 5, the exposed portion 10 is reduced. This continues until the actuator member 9 is in the fully retracted position, as determined by the LVDT 21. When the actuator member 9 reaches the fully retracted position, the actuation force on the aircraft component 3 is substantially zero. The end portion 27 does not touch the end stop 7.

In this manner, the EMA 5 operates under normal conditions, and an actuation force may be applied or removed to the aircraft component 3 in order to control the aircraft component 3.

In a failure event scenario (e.g. during maintenance of the aircraft on the ground), there may be a loss of electrical power supplied to the EMA 5. As a result, the electromechanical assembly 23 is unable to provide either the first force, hold force or second force. As a result, the actuator member 9 is unable to provide the actuation force, and any external forces acting on the actuator member 9 from the aircraft component 3 (e.g. due to wind acting on the aircraft component 3) or elsewhere will become the dominant forces on the actuator member 9. The external forces may cause the actuator member 9 to move in an undesired manner.

In a particular example, the external forces cause the actuator member 9 to move in the second direction towards the end stop 7 in an uncontrolled manner. An uncontrolled manner is one in which the velocity and momentum of the actuator member 9 continues to build even though the actuator member 9 is reaching its end (fully retracted) position. As a result, when the actuator member 9 reaches the end position, because its velocity and momentum are high, the actuator member 9 overshoots the end position and continues travelling towards the end stop 7.

In a conventional EMA, the actuator member 9 would in this scenario collide with the end stop and potentially damage the end stop, the actuator member, and other components within the EMA. However, because of the damping arrangement 2 of the present invention, the momentum of the overshooting actuator member 9 can be reduced.

In the present invention, as the actuator member 9 moves towards the end stop 7, it collides with the damping arrangement 2, more specifically, with the pistons 13 and the portion of the biasing member 17 which covers the pistons 13. On making contact with the pistons 13, the external forces exerted on the actuator member 9 are transferred to the pistons 13. As a result, the pistons 13 move in the direction of the force, and the pistons 13 move along the constrained passages 15.

The constrained passages 15 contain lubricant fluid 11. The lubricant fluid 11 is the same as the lubricant fluid 11 used to reduce friction in the EMA 5. In the present example, the constrained passages 15 are full of the lubricant fluid 11.

When the pistons 13 enter the constrained passages 15, a volume of fluid is displaced out of the constrained passages 15 equal to the volume of the pistons 13 which have entered the constrained passages 15.

The fluid may either be displaced by exiting the constrained passages 15 through the same side in which the pistons 13 entered, through an aperture on another side of the constrained passages 15, or if there is a pressure difference between connected constrained passages 15, then through a connection channel which connects the constrained passages 15 together. Through either one or a combination of these mechanisms, the lubricant fluid 11 is displacement from within the constrained passages 15. Each of these mechanisms causes the lubricant fluid 11 to displace in a restricted manner, providing resistance to the movement of the lubricant fluid 11.

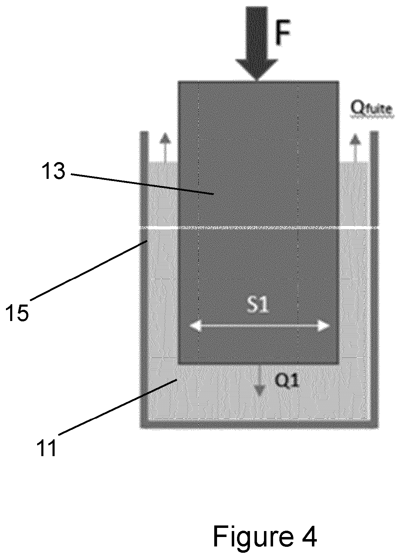

Fig. 4 illustrates an exemplary embodiment wherein a piston 13 enters a constrained passage 15. In the example shown in Fig. 4, the constrained passage 15 does not have a exit aperture, and as a result the only exit path for the lubricant fluid 11 is through the same side in which the piston 13 enters.

The resistance to the movement of the lubricant fluid 11 thus provides a damping force in an opposite direction to the movement of the pistons 13 when they enter the constrained passages 15. The speed of the pistons 13 entering the constrained passages 15 increases with increasing external force exerted on the actuator member 9. A larger external force results in the pistons 13 entering the constrained passages 15 with a greater speed, which results in a greater volume of lubricant fluid 11 being displaced and a greater resistive force.

Accordingly, the resistive force created when the lubricant fluid 11 is displaced provides a damping force to the actuator member 9, which helps to reduce the velocity of the actuator member 9. As a result, when the actuator member 9 eventually collides with the end stop 7, it will do so with a much lower momentum and kinetic energy. Thus, the actuator member 9 can be brought to rest in a safe and controlled manner, and without causing damage to any of the components with the EMA 5.

Once the actuator member 9 has been safely brought to rest, the EMA 5 may be reused. Power is re-supplied to the electromechanical assembly 23, the actuator member 9 moves to a normal operating position, and the contact between the actuator member 9 and the pistons 13 is broken. When the force from the actuator member 9 is removed from the pistons 13, the biasing member 17 moves the pistons 13 into the piston neutral position, wherein the pistons 13 are retracted and extend a shorter distance into the constrained passages 15. As the pistons 13 exit the constrained passages 15, lubricant fluid 11 re-enters the constrained passages 15. In this manner, the biasing member 17 configures the damping arrangement 2 for another collision impact. The damping arrangement 2 of the present invention can thus be re-used multiple times.

When considering the design of a damping arrangement according to the present invention, it is important to take into account safety regulations and worst case scenarios. For example, the damping arrangement 2 may be required to operate in a scenario wherein the actuator member 9 is fully extended and then loses power. This will cause the maximum amount of momentum to build up in the actuator member 9 before collision with the damping arrangement 2.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The attached claims define the scope of the invention.

## Claims

1. An electromechanical actuator (5) comprising:
an electromechanical assembly (23) configured to convert electrical power into a mechanical force;
an actuator member (9) configured to be moveable by the mechanical force; **characterized in that** the actuator (5) further comprises a lubricant fluid (11) for lubricating the actuator member (9) during movement of the actuator member,
and a damping arrangement (2); wherein the damping arrangement (2) comprises a constrained passage (15), the constrained passage (15) configured to restrict a flow of the lubricant fluid (11) in order to provide a damping force to resist a movement of the actuator member (9) during a failure event.

2. The electromechanical actuator (5) of claim 1, further comprising an end stop (7), wherein movement of the actuator member (9) into contact with the end stop (7) during the failure event causes flow of the lubricant fluid (11) in the constrained passage (15) to provide the damping force.

3. The electromechanical actuator (5) of claim 2, wherein the end stop (7) is further configured to house a sensor (21) for determining an operating parameter of the electromechanical actuator (5), optionally wherein the sensor (21) is a linear variable differential transformer.

4. The electromechanical actuator (5) of claims 2 or 3, wherein the end stop (7) is further configured to house one or more cables, wherein the cables are for connecting electrical components of the electromechanical actuator (5).

5. The electromechanical actuator (5) of any preceding claim, further comprising a piston (13), wherein during the failure event the piston (13) is configured to move, in response to the movement of the actuator, from a neutral position to force the lubricant fluid (11) through the constrained passage (15) to provide the damping force.

6. The electromechanical actuator (5) of claim 5, further comprising a biasing member (17) configured to bias the piston (13) towards the neutral position.

7. The electromechanical actuator (5) of claims 5 or 6, wherein there are two; or three; or four; or five; or six; or greater than six pistons (13) and constrained passages (15).

8. The electromechanical actuator (5) of claim 7, wherein the constrained passages (15) are fluidly connected to one another.

9. The electromechanical actuator (5) of any preceding claim, wherein the damping coefficient is:
40,000-50,000 Ns/m for a lubricant fluid (11) temperature of 15 to 25 degrees C;
30,000-39,999 Ns/m for a lubricant fluid (11) temperature of 26 to 35 degrees C;
20,000-29,999 Ns/m for a lubricant fluid (11) temperature of 36 to 45 degrees C;
10,000-19,999 Ns/m for a lubricant fluid (11) temperature of 46 to 75 degrees C; and/or
5,000-9,999 Ns/m for a lubricant fluid (11) temperature of 76 to 145 degrees C.

10. The electromechanical actuator (5) of any preceding claim, further comprising a structural portion (19) mechanically coupled to the electromechanical actuator (5) and configured to provide load bearing between the electromechanical actuator (5) and an anchor point (33) provided on a separate structural component.

11. The electromechanical actuator (5) of any preceding claim, wherein the damping arrangement (2) is a unitary component formed of a single part.

12. A method of manufacturing the actuator (5) of any preceding claim, comprising:
forming the damping arrangement (2) in a single part by depositing one or more materials using additive layer manufacturing, optionally wherein the material is steel.

13. An aircraft (1) comprising one or more of the electromechanical actuator (5) of claim 1-11 optionally wherein the electromechanical actuator (5) is configured to move a component (3) in a landing gear, an aileron or a control surface.

## Patentansprüche

1. Elektromechanischer Aktuator (5), umfassend:
eine elektromechanische Baugruppe (23), die so konfiguriert ist, dass sie elektrische Leistung in eine mechanische Kraft umwandelt;
ein Aktuatorelement (9), das so konfiguriert ist, dass es durch die mechanische Kraft bewegt werden kann; **dadurch gekennzeichnet, dass** der Aktuator (5) ferner ein Schmiermittelfluid (11) zu der Schmierung des Aktuatorelements (9) während der Bewegung des Aktuatorelements und eine Dämpfungsanordnung (2) umfasst;
wobei die Dämpfungsanordnung (2) einen eingeschränkten Durchgang (15) umfasst, wobei der eingeschränkte Durchgang (15) so konfiguriert ist, dass er den Fluss des Schmiermittelfluids (11) einschränkt, um eine Dämpfungskraft bereitzustellen, die einer Bewegung des Aktuatorelements (9) während eines Ausfallereignisses entgegenwirkt.

2. Elektromechanischer Aktuator (5) nach Anspruch 1, ferner umfassend einen Endanschlag (7), wobei die Bewegung des Aktuatorelements (9) in Kontakt mit dem Endanschlag (7) während des Ausfallereignisses dazu führt, dass der Fluss des Schmiermittelfluids (11) im eingeschränkten Durchgang (15) die Dämpfungskraft bereitstellt.

3. Elektromechanischer Aktuator (5) nach Anspruch 2, wobei der Endanschlag (7) ferner so konfiguriert ist, dass er einen Sensor (21) zu der Bestimmung eines Betriebsparameters des elektromechanischen Aktuators (5) aufnimmt, wobei der Sensor (21) optional ein linearer variabler Differenzialtransformator ist.

4. Elektromechanischer Aktuator (5) nach Anspruch 2 oder 3, wobei der Endanschlag (7) ferner so konfiguriert ist, dass er ein oder mehrere Kabel aufnehmen kann, wobei die Kabel zu dem Anschluss elektrischer Komponenten des elektromechanischen Aktuators (5) dienen.

5. Elektromechanischer Aktuator (5) nach einem der vorhergehenden Ansprüche, ferner umfassend einen Kolben (13), wobei der Kolben (13) so konfiguriert ist, dass er sich während des Ausfallereignisses als Reaktion auf die Bewegung des Aktuators aus einer Neutralstellung bewegt, um das Schmiermittelfluid (11) durch den eingeschränkten Durchgang (15) zu zwingen, um die Dämpfungskraft bereitzustellen.

6. Elektromechanischer Aktuator (5) nach Anspruch 5, ferner umfassend ein Vorspannelement (17), das so konfiguriert ist, dass es den Kolben (13) in Richtung der Neutralstellung vorspannt.

7. Elektromechanischer Aktuator (5) nach den Ansprüchen 5 oder 6, wobei es zwei oder drei oder vier oder fünf oder sechs oder mehr als sechs Kolben (13) und eingeschränkte Durchgänge (15) gibt.

8. Elektromechanischer Aktuator (5) nach Anspruch 7, wobei die eingeschränkten Durchgänge (15) fluidisch miteinander verbunden sind.

9. Elektromechanischer Aktuator (5) nach einem der vorhergehenden Ansprüche, wobei der Dämpfungskoeffizient wie folgt lautet:
40.000-50.000 Ns/m für ein Schmiermittelfluid (11) mit einer Temperatur von 15 bis 25 Grad Celsius;
30.000-39.999 Ns/m für ein Schmiermittelfluid (11) mit einer Temperatur von 26 bis 35 Grad Celsius;
20.000-29.999 Ns/m für ein Schmiermittelfluid (11) mit einer Temperatur von 36 bis 45 Grad Celsius;
10.000-19.999 Ns/m für ein Schmiermittelfluid (11) mit einer Temperatur von 46 bis 75 Grad Celsius; und/oder
5.000-9.999 Ns/m für ein Schmiermittelfluid (11) mit einer Temperatur von 76 bis 145 Grad Celsius.

10. Elektromechanischer Aktuator (5) nach einem der vorhergehenden Ansprüche, ferner umfassend einen strukturellen Teil (19), der mechanisch mit dem elektromechanischen Aktuator (5) gekoppelt und so konfiguriert ist, dass er eine Lastaufnahme zwischen dem elektromechanischen Aktuator (5) und einem Verankerungspunkt (33), der an einer separaten strukturellen Komponente vorgesehen ist, bereitstellt.

11. Elektromechanischer Aktuator (5) nach einem der vorhergehenden Ansprüche, wobei die Dämpfungsanordnung (2) eine aus einem einzigen Teil gebildete Einheitskomponente ist.

12. Verfahren zur Herstellung des Aktuators (5) gemäß einem der vorhergehenden Ansprüche, umfassend:
Bilden der Dämpfungsanordnung (2) in einem einzigen Teil durch Abscheidung eines oder mehrerer Materialien unter Verwendung der additiven Schichtfertigung, wobei das Material optional Stahl ist.

13. Luftfahrzeug (1), das einen oder mehrere der elektromechanischen Aktuatoren (5) gemäß den Ansprüchen 1 bis 11 umfasst, wobei der elektromechanische Aktuator (5) optional so konfiguriert ist, dass er eine Komponente (3) in einem Landegestell, einem Querruder oder einer Steuerfläche bewegt.

## Revendications

1. Actionneur électromécanique (5) comprenant :
un ensemble électromécanique (23) configuré pour convertir une puissance électrique en une force mécanique ;
un organe d'actionneur (9) configuré pour pouvoir être déplacé par la force mécanique ; **caractérisé en ce que** l'actionneur (5) comprend en outre un fluide lubrifiant (11) pour lubrifier l'organe d'actionneur (9) pendant le mouvement de l'organe d'actionneur, et un agencement d'amortissement (2) ;
dans lequel l'agencement d'amortissement (2) comprend un passage contraint (15), le passage contraint (15) étant configuré pour restreindre un écoulement du fluide lubrifiant (11) afin de fournir une force d'amortissement pour résister à un mouvement de l'organe d'actionneur (9) pendant un événement de défaillance.

2. Actionneur électromécanique (5) selon la revendication 1, comprenant en outre une butée (7), dans lequel le mouvement de l'organe d'actionneur (9) en contact avec la butée (7) pendant l'événement de défaillance provoque l'écoulement du fluide lubrifiant (11) dans le passage contraint (15) pour fournir la force d'amortissement.

3. Actionneur électromécanique (5) selon la revendication 2, dans lequel la butée (7) est en outre configurée pour loger un capteur (21) de détermination d'un paramètre de fonctionnement de l'actionneur électromécanique (5), facultativement dans lequel le capteur (21) est un transformateur différentiel à variation linéaire.

4. Actionneur électromécanique (5) selon les revendications 2 ou 3, dans lequel la butée (7) est en outre configurée pour loger un ou plusieurs câbles, dans lequel les câbles servent à connecter des composants électriques de l'actionneur électromécanique (5).

5. Actionneur électromécanique (5) selon une quelconque revendication précédente, comprenant en outre un piston (13), dans lequel, pendant l'événement de défaillance, le piston (13) est configuré pour se déplacer, en réponse au mouvement de l'actionneur, à partir d'une position neutre pour forcer le fluide lubrifiant (11) à passer à travers le passage contraint (15) pour fournir la force d'amortissement.

6. Actionneur électromécanique (5) selon la revendication 5, comprenant en outre un organe de sollicitation (17) configuré pour solliciter le piston (13) vers la position neutre.

7. Actionneur électromécanique (5) selon les revendications 5 ou 6, dans lequel il y a deux ; trois ; quatre ; cinq ; six ; ou plus de six pistons (13) et passages contraints (15).

8. Actionneur électromécanique (5) selon la revendication 7, dans lequel les passages contraints (15) sont en communication fluidique les uns avec les autres.

9. Actionneur électromécanique (5) selon une revendication précédente, dans lequel le coefficient d'amortissement est de :
40 000 à 50 000 Ns/m pour une température de fluide lubrifiant (11) de 15 à 25 degrés C ;
30 000 à 39 999 Ns/m pour une température de fluide lubrifiant (11) de 26 à 35 degrés C ;
20 000 à 29 999 Ns/m pour une température de fluide lubrifiant (11) de 36 à 45 degrés C ;
10 000 à 19 999 Ns/m pour une température de fluide lubrifiant (11) de 46 à 75 degrés C ; et/ou
5 000 à 9 999 Ns/m pour une température de fluide lubrifiant (11) de 76 à 145 degrés C.

10. Actionneur électromécanique (5) selon une quelconque revendication précédente, comprenant en outre une partie structurale (19) accouplée mécaniquement à l'actionneur électromécanique (5) et configurée pour fournir un support de charge entre l'actionneur électromécanique (5) et un point d'ancrage (33) prévu sur un composant structural distinct.

11. Actionneur électromécanique (5) selon une quelconque revendication précédente, dans lequel le système d'amortissement (2) est un composant unitaire formé d'une seule pièce.

12. Procédé de fabrication de l'actionneur (5) selon une quelconque revendication précédente, comprenant :
la formation de l'agencement d'amortissement (2) en une seule pièce par dépôt d'un ou plusieurs matériaux par fabrication additive, facultativement dans lequel le matériau est de l'acier.

13. Aéronef (1) comprenant un ou plusieurs actionneurs électromécaniques (5) selon les revendications 1 à 11, facultativement dans lequel l'actionneur électromécanique (5) est configuré pour déplacer un composant (3) dans un train d'atterrissage, un aileron ou une gouverne.
